# EUROPÄISCHE PATENTANMELDUNG

(11) **EP 4 545 803 A1**
(43) Veröffentlichungstag der Anmeldung: **30.04.2025**
(21) Anmeldenummer: 24196124.2
(22) Anmeldetag: 23.08.2024
(51) Int. Cl.: F15B 11/042, F15B 21/00, E02F 9/22

(54) **HYDRAULISCHE ANORDNUNG UND NUTZFAHRZEUG**

(30) Priorität: 27.10.2023 DE 102023129649
(71) Anmelder: Deere & Company, Moline, IL 61265 (US)
(72) Erfinder: BILLICH, MANUEL, 68163 Mannheim (DE); MEID, MICHAEL, 68163 Mannheim (DE)
(74) Vertreter: Dehnhardt, Florian Christopher

(57) **Zusammenfassung**

Die Erfindung betrifft eine hydraulische Anordnung (42) mit einem an einen Pumpenausgang (54) einer hydraulischen Verstellpumpe (46) hydraulisch anschließbaren Versorgungsanschluss (48) und mit einem Rückmeldeanschluss (50). Außerdem ist eine von einem Ausgangsdruck (p_a) der Verstellpumpe (46) und von einem Meldedruck (p_m) des Rückmeldeanschlusses (50) abhängige Verstellsteuerung (64) zur Verstellung der Verstellpumpe (46) vorgesehen. Im Durchflussweg zwischen dem Pumpenausgang (54) und dem Versorgungsanschluss (48) ist eine hydraulische Ventilvorrichtung (70) angeordnet. Die Ventilvorrichtung (70) enthält eine Ventileinheit (72, 74, 78), welche im Durchflussweg oder am Durchflussweg als Abzweig zu einem Tankanschluss (92) abhängig von einer Schaltstellung als hydraulische Verbindung oder Unterbrechung wirksam ist. Außerdem betrifft die Erfindung ein Nutzfahrzeug (10) mit einer solchen hydraulischen Anordnung (42).

## Beschreibung

Die Erfindung betrifft eine hydraulische Anordnung für ein Nutzfahrzeug mit einer hydraulischen Verstellpumpe zur Versorgung hydraulischer Verbraucher des Nutzfahrzeugs. Weiter betrifft die Erfindung ein Nutzfahrzeug mit einer solchen hydraulischen Anordnung.

Bei Traktoren ist es bekannt, variable Verstellpumpen für die Versorgung fahrzeuginterner oder externer hydraulischer Verbraucher einzusetzen. Die Verstellpumpe wird, vorzugsweise über ein Getriebe, von dem Antriebsmotor des Nutzfahrzeugs bzw. Traktors angetrieben. Bei einem Startvorgang des Antriebsmotors ist die Verstellsteuerung der Verstellpumpe in vielen Fällen auf eine maximale Förderposition, d.h. zur Förderung einer maximalen Hydraulikmenge, eingestellt. Dies erfordert eine entsprechend hohe Antriebsleistung des Antriebsmotors. Ein Kaltstart des Nutzfahrzeugs kann wegen der erhöhten Viskosität des Hydraulikmediums den Leistungsverbrauch der Verstellpumpe zusätzlich ansteigen lassen.

Der vorliegenden Erfindung liegt die Aufgabe zugrunde, eine hydraulische Anordnung und ein Nutzfahrzeug vorzuschlagen, welche die für die Verstellpumpe benötigte Leistung beim Starten des Nutzfahrzeugs reduziert.

Diese Aufgabe wird durch eine hydraulische Anordnung mit den Merkmalen des unabhängigen Patentanspruchs 1 sowie durch ein Nutzfahrzeug mit den Merkmalen des unabhängigen Patentanspruchs 12 gelöst.

Weitere vorteilhafte Ausgestaltungen der erfindungsgemäßen hydraulischen Anordnung und des erfindungsgemäßen Nutzfahrzeugs gehen aus den Unteransprüchen hervor.

Gemäß Anspruch 1 wird eine hydraulische Anordnung für ein Nutzfahrzeug vorgeschlagen, welche eine hydraulische Verstellpumpe enthält, an deren Pumpenausgang ein Versorgungsanschluss als Schnittstelle zur Versorgung hydraulischer Verbraucher anschließbar ist. Dabei kann es sich um fahrzeuginterne Verbraucher und ggf. auch um fahrzeugexterne Verbraucher (z.B. eines Anbaugeräts) handeln. Weiterhin ist an der hydraulischen Anordnung ein Rückmeldeanschluss als Schnittstelle für eine Druckrückmeldung von Verbrauchern vorgesehen. Die Verstellpumpe ist hinsichtlich ihrer Fördermenge bzw. ihres Volumenstromes durch eine Verstellsteuerung verstellbar, welche von einem Ausgangsdruck der Verstellpumpe, einem Meldedruck des Rückmeldeanschlusses und optional von einer oder mehreren weiteren physikalischen Größen abhängig ist. Außerdem enthält die hydraulische Anordnung eine hydraulische Ventilvorrichtung im Durchflussweg zwischen dem Pumpenausgang und dem Versorgungsanschluss.

Bei Verstellpumpen kann die Fördermenge bzw. der Volumenstrom des geförderten Hydraulikmediums (z.B. Öl) nicht nur durch unterschiedliche Antriebsdrehzahlen, sondern auch bei gleichbleibender Antriebsdrehzahl der Verstellpumpe verstellt werden. Als Stellgrößen sind verschiedene Parameter denkbar, z.B. ein aktueller Hydraulikdruck, insbesondere am Verstellpumpenausgang und/oder an einem hydraulischen Rückmeldeanschluss, an welchem ein hydraulischer Meldedruck bzw. Lastmeldedruck von hydraulischen Verbrauchern anliegt. Die jeweilige(n) Stellgröße(n) kann bzw. können eine geeignete Verstellsteuerung beeinflussen, welche die Verstellpumpe hinsichtlich ihrer Fördermenge verstellt, insbesondere kontinuierlich verstellt.

Die Verstellsteuerung kann zwischen einer Förderposition mit einer maximalen Fördermenge und einer Förderposition mit einer minimalen Fördermenge verstellt werden. Vorzugsweise wird hierbei ein hydraulischer Verstellzylinder verwendet.

In der Ventilvorrichtung gemäß Anspruch 1 ist mindestens eine Ventileinheit enthalten, deren Betätigung eine Aktivierung spezifischer Schaltstellungen erlaubt. Hierdurch ist es technisch effizient möglich, während eines Startvorganges den Ausgangsdruck und/oder die Fördermenge bzw. den Volumenstrom der Verstellpumpe zu begrenzen oder zu reduzieren, insbesondere auf ein Minimum zu reduzieren. Folglich wird die Leistungsaufnahme der Verstellpumpe vorteilhaft begrenzt oder reduziert. Somit kann eine geeignete Betätigung der Ventilvorrichtung bzw. der darin enthaltenen Ventileinheit(en) im Zusammenhang mit einem beabsichtigten Startvorgang des Nutzfahrzeugs die vom Antriebsmotor für die Verstellpumpe benötigte Leistung reduzieren. Auf diese Weise ist beim Startvorgang eine niedrigere Leistung des Antriebsmotors erforderlich. Folglich können der Antriebsmotor und der Startermotor des Nutzfahrzeugs in einer Startphase entlastet und mit niedrigen Energieverlusten unterstützt werden. Insbesondere bei einem Kaltstart mit hoher Viskosität des Hydraulikmediums werden die Verstellpumpe und der Antriebsmotor sowie der Startermotor des Nutzfahrzeugs entlastet. Der Startvorgang des Nutzfahrzeugs kann mit deutlich geringerem Leistungsbedarf durchgeführt werden, was auch den technischen Ablauf eines erfolgreichen Kaltstarts unterstützt. Mit der verwendeten Ventilvorrichtung kann auf eine Unterstützung der Verstellpumpe durch eine Hilfspumpe verzichtet werden. Die hydraulische Anordnung kann dementsprechend kostengünstiger und mit geringerem Bauvolumen aufgebaut werden.

Für die vorbeschriebene Unterstützung des Startvorgangs eines Nutzfahrzeugs enthält die Ventilvorrichtung gemäß Anspruch 1 eine im Durchflussweg hydraulisch zwischengeschaltete Ventileinheit und/oder eine am Durchflussweg hin zu einem Tankanschluss hydraulisch abzweigende Ventileinheit. Die im Durchflussweg zwischengeschaltete Ventileinheit wirkt in einer ersten Schaltstellung bzw. Ausgangs- oder Ruhestellung als eine hydraulische Verbindung im Durchflussweg und in einer zweiten Schaltstellung als eine hydraulische Unterbrechung im Durchflussweg. Die am Durchflussweg als Abzweig hin zu einem Tankanschluss angeschlossene Ventileinheit wirkt in einer Ruhestellung bzw. ersten Schaltstellung als eine hydraulische Unterbrechung zu dem Tankanschluss und in einer zweiten Schaltstellung als eine hydraulische Verbindung zu dem Tankanschluss. Mit den aktivierbaren unterschiedlichen Schaltstellungen ihrer Ventileinheit(en) schafft die Ventilvorrichtung eine technisch einfache und kostengünstige Lösung für die gewünschte Leistungsreduzierung während eines Startvorganges des Nutzfahrzeugs.

Im Rahmen der hydraulischen Anordnung ist der vorgenannte Tankanschluss als eine hydraulische Schnittstelle wirksam, an die ein Hydrauliktank anschließbar ist. Der Hydrauliktank dient als Vorratsbehälter für Hydraulikmedium (z.B. Öl) innerhalb des betrachteten hydraulischen Kreislaufes. Die hydraulische Anordnung kann mehrere Tankanschlüsse als hydraulische Schnittstellen enthalten.

Der Pumpenausgang bzw. Verstellpumpenausgang kann ein hydraulischer Ausgang unmittelbar an der Verstellpumpe selbst sein oder als ein hydraulischer Ausgang einer die Verstellpumpe enthaltenden Pumpeneinheit ausgeführt sein.

In einer bevorzugten Ausführungsform ist der Pumpenausgang der Verstellpumpe mit einem Tankanschluss hydraulisch verbindbar oder hydraulisch verbunden, wenn die im Durchflussweg zwischen dem Pumpenausgang und dem Versorgungsanschluss angeordnete Ventileinheit ihre zweite Schaltstellung einnimmt. Insbesondere ist ein Ventilanschluss ständig mit einem Tankanschluss hydraulisch verbunden. Die hydraulische Verbindung mit dem Tankanschluss ermöglicht einen sehr niedrigen Tankdruck am Pumpenausgang. Hierdurch kann die für die Verstellpumpe benötigte Antriebsleistung während der Startphase des Nutzfahrzeugs sehr niedrig gehalten werden, selbst wenn der Ausgangsdruck nicht dazu ausreicht, die Verstellsteuerung in Richtung einer reduzierten Fördermenge zu beeinflussen.

Insbesondere ist die hydraulische Verbindung mit dem Tankanschluss vom Erreichen oder Überschreiten eines vorbestimmten Soll-Drucks als Ausgangsdruck am Pumpenausgang abhängig. Eine Verbindung mit dem Tankanschluss kann in der Startphase des Nutzfahrzeugs den Druckanstieg der Verstellpumpe und damit deren Leistungsaufnahme begrenzen. Dabei kann der Soll-Druck derart gewählt werden, dass er einem genügend großen Ausgangsdruck der Verstellpumpe entspricht, welcher mittels der Verstellsteuerung die Förderposition mit minimaler Fördermenge und somit eine weitere Reduzierung der erforderlichen Pumpenleistung erzielt. Dies kann beispielsweise mit einem zwischen dem vorgenannten Ventilanschluss und dem Tankanschluss zwischengeschalteten Druckentlastungsventil realisiert werden, dessen Rückstellfeder auf den Soll-Druck dimensioniert oder einstellbar ist.

In einer bevorzugten Ausführungsform weist die im Durchflussweg zwischen dem Pumpenausgang der Verstellpumpe und dem Versorgungsanschluss angeordnete hydraulische Ventileinheit zumindest an der dem Pumpenausgang zugewandten Anschlussseite einen einzigen Ventilanschluss auf. Dies unterstützt eine technisch einfache und kostengünstige Ausgestaltung der Ventileinheit. Beispielsweise ist die Ventileinheit als ein 2/2-Wegeventil ausgestaltet. Bei dieser Ausgestaltung kann die Ventilvorrichtung in der zweiten Schaltstellung der Ventileinheit als eine einfache Unterbrechung zwischen der Verstellpumpe und dem Versorgungsanschluss wirken. Während eines Startvorganges des Nutzfahrzeugs bei einer aktivierten zweiten Schaltstellung steigt dann der Ausgangsdruck der Verstellpumpe lediglich bis zu einem Bereitschaftsdruck an, welcher automatisch die Verstellsteuerung derart beeinflusst, dass an der Verstellpumpe eine Förderposition mit einer minimalen Fördermenge eingestellt wird. Hierdurch wird während des Startvorgangs sowohl der Ausgangsdruck der Verstellpumpe als auch die Fördermenge begrenzt, was die Leistungsaufnahme der Verstellpumpe reduziert.

In einer weiteren Ausgestaltung der im Durchflussweg zwischen dem Pumpenausgang der Verstellpumpe und dem Versorgungsanschluss angeordneten Ventileinheit weist diese an der dem Pumpenausgang abgewandten Anschlussseite zwei Ventilanschlüsse auf. Dabei ist einer dieser beiden Ventilanschlüsse dem Versorgungsanschluss zugeordnet, während der andere Ventilanschluss einem Tankanschluss zugeordnet sein kann. In der als Unterbrechung des Durchflussweges wirksamen zweiten Schaltstellung der Ventileinheit kann der Pumpenausgang dann mit dem Tankanschluss verbunden werden.

In einer weiteren bevorzugten Ausführungsform enthält die im Durchflussweg zwischen dem Pumpenausgang und dem Versorgungsanschluss angeordnete Ventilvorrichtung eine Ventileinheit als Abzweig zu einem Tankanschluss, wobei diese Ventileinheit als ein 2/2-Wegeventil ausgebildet ist. In der zweiten Schaltstellung dieser Ventileinheit ist der Pumpenausgang automatisch mit dem Tankanschluss hydraulisch verbunden. Wie bereits erwähnt, kann dann aufgrund des niedrigen Tankdrucks die für die Verstellpumpe benötigte Antriebsleistung während der Startphase des Nutzfahrzeugs sehr niedrig gehalten werden.

Ausgehend von dem Pumpenausgang hat der Hydraulikfluss in Richtung des Tankanschlusses bzw. des daran angeschlossenen Tankbehälters einen deutlich niedrigeren Widerstand als in Richtung der Verbraucher. Insoweit kann eine hydraulische Unterbrechung zwischen dem Pumpenausgang und dem Versorgungsanschluss mit geringem technischen Aufwand und kostensparend auch ohne eine als Unterbrechung zwischen dem Pumpenausgang und dem Versorgungsanschluss wirksame Ventileinheit realisiert werden. Hierzu enthält die Ventilvorrichtung vorzugsweise nur das vorgenannte, als Abzweig zum Tankanschluss wirksame 2/2-Wegeventil. Die zweite Schaltstellung der am Durchflussweg abzweigenden Ventileinheit kann beispielsweise elektronisch mittels einer geeigneten Steuereinheit aktiviert werden.

Alternativ kann die zweite Schaltstellung der am Durchflussweg abzweigenden Ventileinheit in Abhängigkeit vom Erreichen oder Überschreiten eines vorbestimmten Soll-Drucks am Pumpenausgang aktiviert werden. Diese automatische Aktivierung kann vorzugsweise mittels einer als Druckentlastungsventil ausgebildeten Ventileinheit realisiert werden.

Vorzugsweise ist der vorgenannte Soll-Druck an der abzweigenden Ventileinheit veränderlich einstellbar. Hierzu wird beispielsweise die Vorspannung einer Rückstellfeder des Druckentlastungsventils unterschiedlich eingestellt. Auf diese Weise kann die Ventileinheit einerseits mit einem niedrig eingestellten Soll-Druck (z.B. 5 bis 10 bar) während eines Startvorgangs eine sehr niedrige Antriebsleistung der Verstellpumpe erzielen und andererseits mit einem hoch eingestellten Soll-Druck (z.B. 235 bar) während des normalen Betriebs der Verstellpumpe für eine zuverlässige hydraulische Unterbrechung des Abzweigs sorgen.

Vorzugsweise enthält die hydraulische Anordnung zusätzlich noch eine hydraulische Ventilvorrichtung im Durchflussweg zwischen dem Rückmeldeanschluss und der Verstellsteuerung der Verstellpumpe. Dabei enthält die Ventilvorrichtung eine Ventileinheit mit einer als hydraulische Verbindung im Durchflussweg wirksamen ersten Schaltstellung und einer als hydraulische Unterbrechung im Durchflussweg wirksamen zweiten Schaltstellung. Die Kombination der beiden Ventilvorrichtungen in der hydraulischen Anordnung unterstützt die gewünschte Leistungsreduzierung während eines Startvorganges des Nutzfahrzeugs.

Mit den aktivierbaren unterschiedlichen Schaltstellungen ihrer Ventileinheit unterstützt die zwischen dem Rückmeldeanschluss und der Verstellsteuerung der Verstellpumpe angeordnete Ventilvorrichtung die gewünschte Leistungsreduzierung während eines Startvorganges des Nutzfahrzeugs. So kann etwa in der zweiten Schaltstellung der Ventileinheit keine Last an der Verstellpumpe bzw. der Verstellsteuerung sensiert werden, so dass die Verstellpumpe lediglich einen verhältnismäßig niedrigen Bereitschaftsdruck generiert und folglich nur eine geringe Leistungsaufnahme hat.

Vorzugsweise weist die Ventileinheit der im Durchflussweg zwischen dem Rückmeldeanschluss und der Verstellsteuerung angeordneten Ventilvorrichtung zumindest an der der Verstellsteuerung zugewandten Anschlussseite einen einzigen Ventilanschluss auf. Dies unterstützt eine technisch einfache und kostengünstige Ausgestaltung der Ventileinheit. Beispielsweise ist die Ventileinheit als ein 2/2-Wegeventil ausgestaltet. Bei dieser Ausgestaltung kann die Ventilvorrichtung in der zweiten Schaltstellung der Ventileinheit als eine einfache Unterbrechung zwischen der Verstellsteuerung und dem Rückmeldeanschluss wirken. Während eines Startvorganges des Nutzfahrzeugs bei einer aktivierten zweiten Schaltstellung steigt dann der Ausgangsdruck der Verstellpumpe wegen der fehlenden Lastsensierung lediglich bis zu einem Bereitschaftsdruck an. Der Bereitschaftsdruck kann ggf. die Verstellsteuerung derart beeinflussen, dass an der Verstellpumpe eine Förderposition mit einer minimalen Fördermenge eingestellt wird. Hierdurch kann während des Startvorgangs zumindest der Ausgangsdruck der Verstellpumpe und ggf. auch die Fördermenge begrenzt werden, was die Leistungsaufnahme der Verstellpumpe reduziert.

In einer anderen vorteilhaften Ausgestaltung der im Durchflussweg zwischen der Verstellsteuerung und dem Rückmeldeanschluss angeordneten Ventileinheit weist diese an der der Verstellsteuerung abgewandten Anschlussseite zwei Ventilanschlüsse auf, von denen ein Ventilanschluss ständig mit einem Tankanschluss hydraulisch verbunden ist. Folglich ist auch bei unterschiedlichen hydraulischen Randbedingungen gewährleistet, dass an dem entsprechenden Verstellsteuerungs-Eingang in der zweiten Schaltstellung der Ventileinheit nur ein sehr niedriger Tankdruck anliegt. Dies unterstützt die Generierung eines niedrigen Ausgangsdrucks an der Verstellpumpe während des Startvorganges. Hierdurch kann die für die Verstellpumpe benötigte Antriebsleistung während der Startphase des Nutzfahrzeugs sehr niedrig gehalten werden.

Die Erfindung betrifft weiter ein Nutzfahrzeug, vorzugsweise ein land- oder forstwirtschaftliches Zugfahrzeug (z.B. ein Traktor oder Schlepper) oder eine Baumaschine, mit einem Antriebsmotor und mit einer hydraulischen Anordnung nach einem der Ansprüche 1 bis 11.

Das erfindungsgemäße Nutzfahrzeug weist die oben beschriebenen Vorteile der erfindungsgemäßen hydraulischen Anordnung auf. Die hydraulische Anordnung ermöglicht eine effiziente technische Wirkungsweise der Verstellpumpe vor, während und nach einem Startvorgang des Antriebsmotors eines Nutzfahrzeugs. Insbesondere bei einem Kaltstart können herkömmliche Beeinträchtigungen in der Startphase des Antriebsmotors vermieden werden. So ermöglicht es die hydraulische Anordnung, dass bei einem Kaltstart mit hoher Viskosität des Hydraulikmediums die Verstellpumpe, der Antriebsmotor und der ihn antreibende Startermotor mit besonders niedrigen Energieverlusten betrieben werden können. Der Startvorgang des Nutzfahrzeugs kann mit deutlich geringerem Leistungsbedarf durchgeführt werden, was auch den technischen Ablauf eines erfolgreichen Kaltstarts unterstützt.

Vorzugsweise ist der Antriebsmotor über eine geeignete Komponente einer Getriebestruktur des Nutzfahrzeugs mit der Verstellpumpe antriebsverbunden.

Technisch effizient wird die gewünschte Reduzierung der für die Verstellpumpe benötigten Antriebsleistung vorteilhaft dadurch erreicht, dass zumindest eine Ventileinheit, insbesondere sämtliche Ventileinheiten, der verwendeten Ventilvorrichtung unmittelbar vor einem Startvorgang und/oder während eines Startvorganges des Antriebsmotors ihre zweite Schaltstellung einnimmt.

Zur Aktivierung ihrer unterschiedlichen Schaltstellungen können die Ventileinheiten elektronisch mittels einer geeigneten Steuereinheit betätigt bzw. angesteuert werden. Alternativ können einzelne oder sämtliche Ventileinheiten einen hydraulischen Steuereingang für die Änderung der Schaltstellung aufweisen. Der Steuerdruck für den Steuereingang ist vorzugsweise der Ausgangsdruck der Verstellpumpe.

Die Erfindung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Darstellung eines erfindungsgemäßen Nutzfahrzeugs,
- Fig. 2: ein hydraulischer Schaltplan mit der erfindungsgemä-ßen hydraulischen Anordnung in einer ersten Ausführungsform,
- Fig. 3: ein hydraulischer Schaltplan mit der erfindungsgemä-ßen hydraulischen Anordnung in einer weiteren Ausführungsform,
- Fig. 4a: ein erstes Ausführungsbeispiel einer Ventilvorrichtung zwischen einer Verstellpumpe und einem Versorgungsanschluss innerhalb der hydraulischen Anordnung,
- Fig. 4b bis Fig. 4f: weitere Ausführungsbeispiele einer Ventilvorrichtung zwischen einer Verstellpumpe und einem Versorgungsanschluss innerhalb der hydraulischen Anordnung,
- Fig. 5a: ein erstes Ausführungsbeispiel einer Ventilvorrichtung zwischen einem Rückmeldeanschluss und einer Verstellsteuerung der Verstellpumpe innerhalb der hydraulischen Anordnung, und
- Fig. 5b: ein weiteres Ausführungsbeispiel der Ventilvorrichtung zwischen einem Rückmeldeanschluss und einer Verstellsteuerung der Verstellpumpe innerhalb der hydraulischen Anordnung.

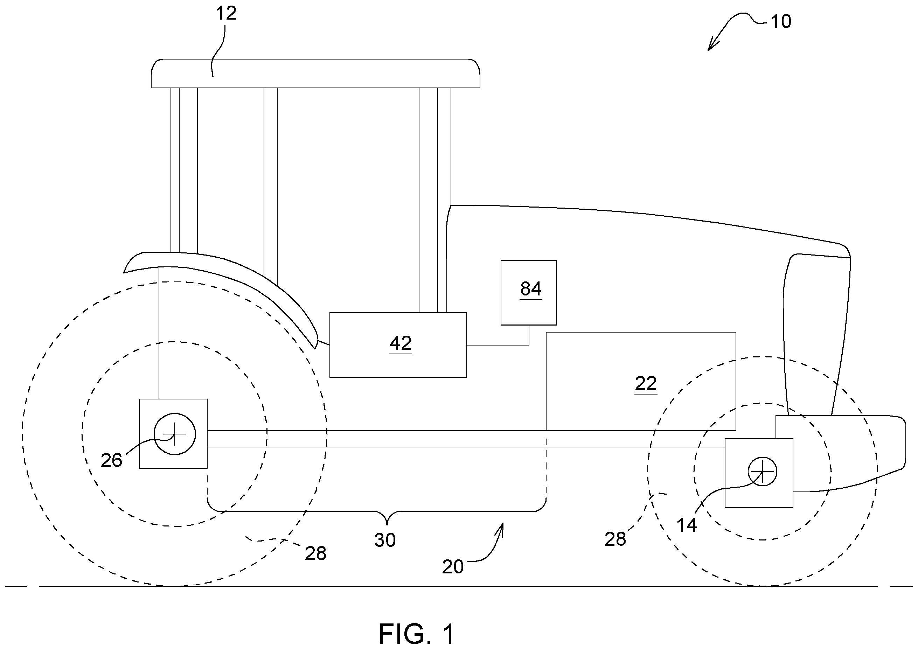

Fig. 1 zeigt eine schematische Darstellung eines erfindungsgemäßen landwirtschaftlichen Nutzfahrzeugs 10, insbesondere in Gestalt eines Traktors, mit einem Antriebsstrang 20. Das Nutzfahrzeug 10 umfasst ferner eine Kabine 12, eine vordere Fahrzeugachse 14 und eine hintere Fahrzeugachse 26. Das Nutzfahrzeug 10 kann eines oder mehrere Bodeneingriffsmittel in Form von Rädern 28 aufweisen. Der Antriebsstrang 20 umfasst einen Antriebsmotor 22, der als Verbrennungskraftmaschine ausgeführt sein kann, und eine Getriebestruktur 30, die aus verschiedenen einzelnen Getriebekomponenten zusammengesetzt sein kann.

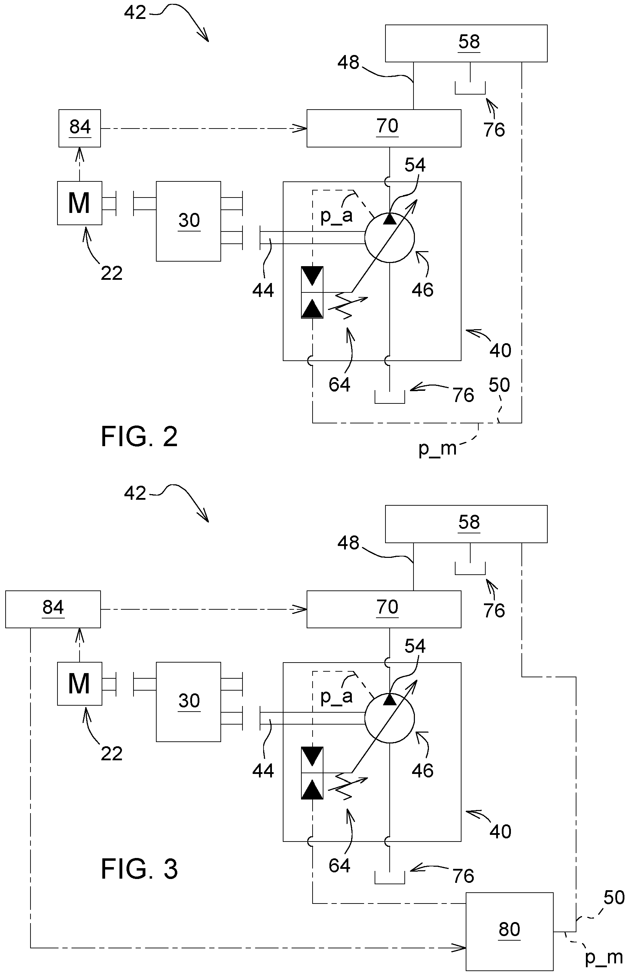

Das Nutzfahrzeug 10 weist eine hydraulische Anordnung 42 mit einer Pumpeneinheit 40 auf. Wie in Fig. 2 und Fig. 3 erkennbar, kann der Antriebsmotor 22 die Getriebestruktur 30 antreiben, welche über eine Getriebekomponente und eine Pumpenantriebswelle 44 eine Verstellpumpe 46 der Pumpeneinheit 40 antreibt. Die hydraulische Anordnung 42 kann baukastenartig in das Nutzfahrzeug 10 integriert sein. Ein baukastenartiger Einbau der hydraulischen Anordnung 42 in das Nutzfahrzeug 10 kann durch verschiedene hydraulische Schnittstellen unterstützt werden. Als solche Schnittstellen können beispielsweise ein Versorgungsanschluss 48, ein Rückmeldeanschluss 50 und ein Tankanschluss 92 dienen.

Gemäß Fig. 2 ist ein Pumpenausgang 54 der Pumpeneinheit 40 über eine hydraulische Ventilvorrichtung 70 an den Versorgungsanschluss 48 anschließbar zur Versorgung hydraulischer Verbraucher 58 des Nutzfahrzeugs 10. Eine Verstellsteuerung 64 zur Verstellung einer hydraulischen Fördermenge der Verstellpumpe 46 ist insbesondere von deren Ausgangsdruck p_a und von einem Meldedruck p_m bzw. Lastmeldedruck an dem Rückmeldeanschluss 50 abhängig. Eingangsseitig ist die Verstellpumpe 46 an einen Hydrauliktank 76 angeschlossen. Das zu den Verbrauchern 58 geförderte Hydraulikmedium fließt in einen oder den Hydrauliktank 76 zurück. Die hydraulische Anordnung 42 kann einen oder mehrere Tankanschlüsse 92 aufweisen, welche als Schnittstelle(n) der Anordnung 42 zum Anschluss eines oder des Hydrauliktanks 76 wirksam sind.

In Fig. 2 ist die Ventilvorrichtung 70 im Durchflussweg zwischen dem Pumpenausgang 54 und dem Versorgungsanschluss 48 zwischengeschaltet.

Fig. 3 zeigt eine weitere Ausführungsform der hydraulischen Anordnung 42. Bei dieser Ausführungsform existiert sowohl die Ventilvorrichtung 70 als auch eine Ventilvorrichtung 80. Letztere ist im Durchflussweg zwischen dem Rückmeldeanschluss 50 und der Verstellsteuerung 64 hydraulisch zwischengeschaltet.

Die vorgenannten hydraulischen Schnittstellen - insbesondere Versorgungsanschluss 48, Rückmeldeanschluss 50, Tankanschluss 92 - können vorzugsweise unmittelbar an der jeweiligen Komponente (z.B. Pumpeneinheit 40, Ventilvorrichtung 70, Ventilvorrichtung 80) der hydraulischen Anordnung 42 angeordnet sein oder mittels einer leitungsartigen Verlängerung mit Abstand zu der jeweiligen Komponente der hydraulischen Anordnung 42 angeordnet sein.

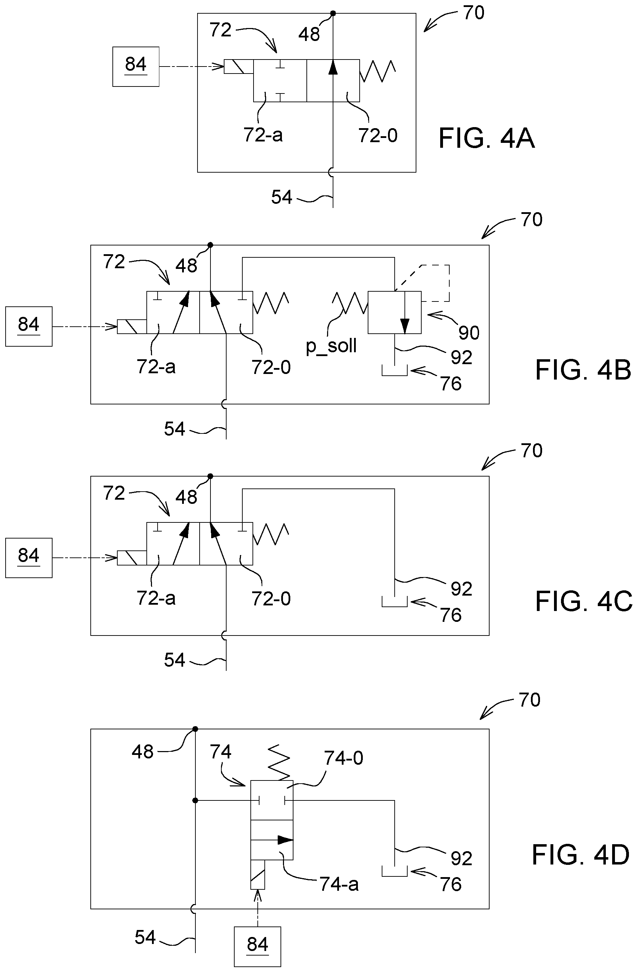

In Fig.4a enthält die Ventilvorrichtung 70 in einer ersten Ausführungsform ein 2/2-Wegeventil als eine Ventileinheit 72. Ausgehend von einer ersten Schaltstellung bzw. Ruhestellung 72-0 ist eine zweite Schaltstellung 72-a durch eine geeignete Steuereinheit 84 aktivierbar. Im Durchflussweg zwischen dem Pumpenausgang 54 und dem Versorgungsanschluss 48 wirkt die Ruhestellung 72-0 als eine hydraulische Verbindung und die zweite Schaltstellung 72-a wirkt als eine hydraulische Unterbrechung.

In Fig. 4b ist die Ventileinheit 72 der Ventilvorrichtung 70 als ein 3/2-Wegeventil ausgebildet, wobei sie an der dem Pumpenausgang 54 abgewandten Anschlussseite zwei Ventilanschlüsse aufweist derart, dass bei aktivierter zweiter Schaltstellung 72-a der Pumpenausgang 54 abhängig vom Erreichen oder Überschreiten eines vorbestimmten Soll-Drucks p_soll als Ausgangsdruck p_a mit einem Tankanschluss 92 hydraulisch verbindbar ist. Hierzu wird ein Druckentlastungsventil 90 eingesetzt, dessen Rückstellfeder auf den Soll-Druck p_soll dimensioniert ist.

Bei der Ventileinheit 72 gemäß Fig. 4c ist der Pumpenausgang 54 in der zweiten Schaltstellung 72-a permanent mit dem Tankanschluss 92 hydraulisch verbunden.

Die Ventilvorrichtung 70 gemäß Fig. 4d enthält keine Ventileinheit 72 als Verbindung und Unterbrechung im Durchflussweg zwischen dem Pumpenausgang 54 und dem Versorgungsanschluss 48. Vielmehr enthält sie eine am vorgenannten Durchflussweg hydraulisch angeschlossene Ventileinheit 74 als einen hydraulischen Abzweig zu einem Tankanschluss 92. Die Ventileinheit 74 hat zwei Schaltstellungen 74-0, 74-a, welche durch die Steuereinheit 84 aktivierbar sind.

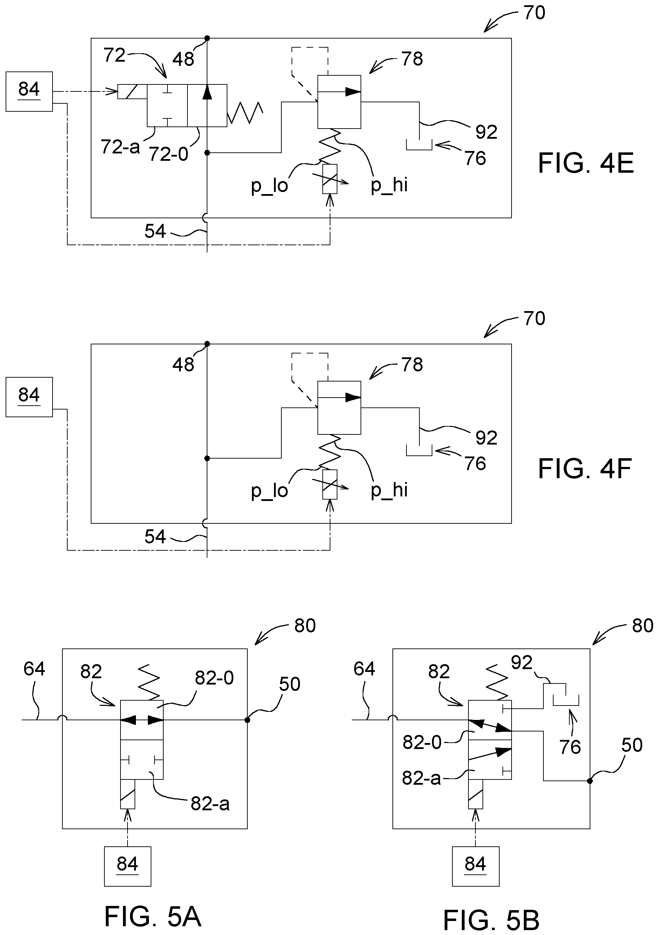

Die Ventilvorrichtung 70 gemäß Fig. 4e enthält eine Kombination aus einer Ventileinheit 72 im Durchflussweg zwischen dem Pumpenausgang 54 und dem Versorgungsanschluss 48 und aus einer an diesem Durchflussweg hydraulisch angeschlossenen Ventileinheit 78 als einen hydraulischen Abzweig zu einem Tankanschluss 92. Die Ventileinheit 78 weist ein Druckentlastungsventil mit einer einstellbaren Rückstellfeder auf. Die Rückstellfeder wird je nach erforderlichem Arbeitsmodus der hydraulischen Anordnung 42 mittels der Steuereinheit 84 auf einen veränderbaren Soll-Druck eingestellt, insbesondere auf einen niedrigen Wert p_lo (z.B. 5 bis 10 bar) oder auf einen hohen Wert p_hi (z.B. 235 bar) eingestellt. In der in Fig. 4e dargestellten ersten Schaltstellung der Ventileinheit 78 wirkt diese als eine hydraulische Unterbrechung zum Tankanschluss 92. Sobald der eingestellte Soll-Druck durch den Ausgangsdruck p_a am Pumpenausgang 54 erreicht oder überschritten worden ist, stellt sich an der Ventileinheit 78 eine zweite Schaltstellung ein, in der die Ventileinheit 78 als eine hydraulische Verbindung zum Tankanschluss 92 wirksam ist.

Die Ventilvorrichtung 70 gemäß Fig. 4f enthält die vorgenannte Ventileinheit 78 und keine Ventileinheit 72.

Fig. 5a zeigt die Ventilvorrichtung 80 im Durchflussweg zwischen dem Rückmeldeanschluss 50 und der Verstellsteuerung 64. Dabei wirkt die als ein 2/2-Wegeventil ausgebildete und von der Steuereinheit 84 ansteuerbare Ventileinheit 82 je nach ihrer Schaltstellung 82-0 (erste Schaltstellung) oder 82-a (zweite Schaltstellung) als eine hydraulische Verbindung oder Unterbrechung im Durchflussweg.

In Fig. 5b ist die Ventileinheit 82 insoweit abgeändert, als sie dort als ein 3/2-Wegeventil ausgebildet ist mit zwei Ventilanschlüssen an der der Verstellsteuerung 64 abgewandten Anschlussseite. Dabei ist in der zweiten Schaltstellung 82-a die Verstellsteuerung 64 mit dem Tankanschluss 92 hydraulisch verbunden.

Mittels der beschriebenen hydraulischen Logik kann die Startphase des Antriebsmotors 22 mit besonders niedrigen Energieverlusten unterstützt werden, was insbesondere bei einem Kaltstart technische Vorteile bedeutet.

Vor einem Start des Nutzfahrzeugs 10 ist die Verstellsteuerung 64, insbesondere deren Verstellzylinder, aufgrund der Druckverhältnisse üblicherweise auf eine Förderposition für eine maximale Fördermenge eingestellt. Das Ziel ist es, in der Startphase des Nutzfahrzeugs 10 die Leistungsaufnahme der Verstellpumpe 46 möglichst klein zu halten und hierbei optional auch die Verstellsteuerung 64, insbesondere deren Verstellzylinder, auf eine Förderposition für eine minimale Fördermenge einzustellen. Dieses Ziel wird mit den hydraulischen Anordnungen 42 gemäß Fig. 2 und Fig. 3 erreicht.

Ausgehend von den Ruhestellungen bzw. ersten Schaltstellungen 72-0, 74-0, 82-0 der Ventileinheiten 72, 74, 82 und/oder einem eingestellten hohen Soll-Druck p_hi an der Ventileinheit 78 wird ein beabsichtigter Start des Antriebsmotors 22 von der Steuereinheit 84 (z.B. über empfangene Bussignale eines Fahrzeug-Busses, wie etwa ISO, CAN) detektiert, welche daraufhin die zweite Schaltstellung 72-a, 74-a, 82-a aktiviert und/oder den niedrigen Soll-Druck p_lo an der Ventileinheit 78 einstellt. Danach kann der Antriebsmotor 22 gestartet werden. Nach durchgeführtem Startvorgang kann die Steuereinheit 84 die Ventileinheiten 72, 74, 82 wieder in ihre erste Schaltstellung 72-0, 74-0, 82-0 überführen und/oder an der Ventileinheit 78 den eingestellten niedrigen Soll-Druck p_lo wieder verändern, indem sie den hohen Soll-Druck p_hi einstellt.

Während und unmittelbar nach dem Start des Antriebsmotors 22 steigt der Ausgangsdruck p_a der Verstellpumpe 46 bei der Variante gemäß Fig. 4a lediglich bis zu einem Bereitschaftsdruck an, während die Verstellsteuerung 64 die Förderposition in Richtung minimaler Fördermenge verstellt.

Während die Pumpenverstellung in Richtung der minimalen Förderposition verstellt wird, könnte der Ausgangsdruck p_a weiter ansteigen. Um diese unerwünschte Pumpenleistung zu vermeiden, kann bei der Variante gemäß Fig. 4b der Soll-Druck p_soll derart eingestellt werden, dass er einem Ausgangsdruck p_a entspricht, welcher ausreichend groß ist, um die Verstellsteuerung 64 in Richtung minimaler Förderposition zu steuern.

Bei der Variante gemäß Fig. 4c verbleibt in der zweiten Schaltstellung 72-a zwar die Verstellsteuerung 64 in ihrer maximalen Förderposition, aber die Verstellpumpe 46 benötigt nur eine geringe Antriebsleistung, da der Ausgangsdruck p_a etwa einem sehr niedrigen Tankdruck entspricht.

Der vorgenannte sehr niedrige Tankdruck am Pumpenausgang 54 kann auch bei der Variante gemäß Fig. 4d erzielt werden.

Auch bei der Variante gemäß Fig. 4e benötigt die Verstellpumpe 46 in der zweiten Schaltstellung nur eine geringe Antriebsleistung, da der Ausgangsdruck p_a etwa einem sehr niedrigen Tankdruck entspricht. Die geringe Antriebsleistung für die Verstellpumpe 46 wird unterstützt, indem an der Ventileinheit 78 der sehr niedrige Soll-Druck p_lo eingestellt ist.

Der vorgenannte sehr niedrige Tankdruck an der Verstellpumpe 46 kann auch mit der Variante gemäß Fig. 4f erzielt werden.

Bei den Varianten gemäß Fig. 5a und Fig. 5b wird in der zweiten Schaltstellung 82-a keine Last sensiert, so dass die Verstellsteuerung 64 in Richtung der minimalen Förderposition beeinflusst werden kann. Außerdem ist es möglich, dass der Ausgangsdruck p_a der Verstellpumpe 46 lediglich bis zu einem Bereitschaftsdruck ansteigt.

## Patentansprüche

1. Hydraulische Anordnung (42) für ein Nutzfahrzeug (10),
- mit einem an einen Pumpenausgang (54) einer hydraulischen Verstellpumpe (46) hydraulisch anschließbaren Versorgungsanschluss (48) als Schnittstelle zur Versorgung hydraulischer Verbraucher (58) des Nutzfahrzeugs (10),
- mit einem Rückmeldeanschluss (50) als Schnittstelle für eine Druckrückmeldung von Verbrauchern (58),
- mit einer von einem Ausgangsdruck (p_a) der Verstellpumpe (46) und von einem Meldedruck (p_m) des Rückmeldeanschlusses (50) abhängigen Verstellsteuerung (64) zur Verstellung der Verstellpumpe (46), und
- mit einer hydraulischen Ventilvorrichtung (70) im Durchflussweg zwischen dem Pumpenausgang (54) und dem Versorgungsanschluss (48), wobei die Ventilvorrichtung (70)
-- eine Ventileinheit (72) enthält mit einer als hydraulische Verbindung im Durchflussweg wirksamen ersten Schaltstellung (72-0) und einer als hydraulische Unterbrechung im Durchflussweg wirksamen zweiten Schaltstellung (72-a), und/oder
-- eine am Durchflussweg hydraulisch angeschlossene Ventileinheit (74, 78) als Abzweig zu einem Tankanschluss (92) enthält mit einer als hydraulische Unterbrechung zum Tankanschluss (92) wirksamen ersten Schaltstellung (74-0) und mit einer als hydraulische Verbindung zum Tankanschluss (92) wirksamen zweiten Schaltstellung (74-a).

2. Hydraulische Anordnung nach Anspruch 1, **dadurch gekennzeichnet, dass** in der zweiten Schaltstellung (72-a) der im Durchflussweg zwischen dem Pumpenausgang (54) der Verstellpumpe (46) und dem Versorgungsanschluss (48) angeordneten Ventileinheit (72) der Pumpenausgang (54) mit einem Tankanschluss (92) hydraulisch verbindbar ist oder hydraulisch verbunden ist.

3. Hydraulische Anordnung nach Anspruch 2, **dadurch gekennzeichnet, dass** in der zweiten Schaltstellung (72-a) der Ventileinheit (72) der Pumpenausgang (54) abhängig vom Erreichen oder Überschreiten eines vorbestimmten Soll-Drucks (p_soll) am Pumpenausgang (54) mit dem Tankanschluss (92) hydraulisch verbindbar ist.

4. Hydraulische Anordnung nach einem der vorhergehenden Ansprüche, **dadurch gekennzeichnet, dass** die im Durchflussweg zwischen dem Pumpenausgang (54) der Verstellpumpe (46) und dem Versorgungsanschluss (48) angeordnete Ventileinheit (72) zumindest an der dem Pumpenausgang (54) zugewandten Anschlussseite einen einzigen Ventilanschluss aufweist.

5. Hydraulische Anordnung nach einem der vorhergehenden Ansprüche, **dadurch gekennzeichnet, dass** die im Durchflussweg zwischen dem Pumpenausgang (54) der Verstellpumpe (46) und dem Versorgungsanschluss (48) angeordnete Ventileinheit (72) an der dem Pumpenausgang (54) abgewandten Anschlussseite zwei Ventilanschlüsse aufweist.

6. Hydraulische Anordnung nach einem der vorhergehenden Ansprüche, **dadurch gekennzeichnet, dass** die am Durchflussweg abzweigende Ventileinheit (74) als ein 2/2-Wegeventil ausgebildet ist.

7. Hydraulische Anordnung nach einem der vorhergehenden Ansprüche, **dadurch gekennzeichnet, dass** die am Durchflussweg abzweigende Ventileinheit (78) ihre als hydraulische Verbindung zum Tankanschluss (92) wirksame zweite Schaltstellung in Abhängigkeit vom Erreichen oder Überschreiten eines vorbestimmten Soll-Drucks (p_lo) am Pumpenausgang (54) einnimmt.

8. Hydraulische Anordnung nach Anspruch 7, **dadurch gekennzeichnet, dass** der Soll-Druck (p_lo, p_hi) an der abzweigenden Ventileinheit (78) veränderlich einstellbar ist.

9. Hydraulische Anordnung nach einem der vorhergehenden Ansprüche, **gekennzeichnet durch** eine hydraulische Ventilvorrichtung (80) im Durchflussweg zwischen dem Rückmeldeanschluss (50) und der Verstellsteuerung (64), wobei die Ventilvorrichtung (80) eine Ventileinheit (82) enthält mit einer als hydraulische Verbindung im Durchflussweg wirksamen ersten Schaltstellung (82-0) und einer als hydraulische Unterbrechung im Durchflussweg wirksamen zweiten Schaltstellung (82-a).

10. Hydraulische Anordnung nach Anspruch 9, **dadurch gekennzeichnet, dass** die im Durchflussweg zwischen dem Rückmeldeanschluss (50) und der Verstellsteuerung (64) angeordnete Ventileinheit (82) zumindest an der der Verstellsteuerung (64) zugewandten Anschlussseite einen einzigen Ventilanschluss aufweist.

11. Hydraulische Anordnung nach Anspruch 9 oder 10, **dadurch gekennzeichnet, dass** die Ventileinheit (82) an der der Verstellsteuerung (64) abgewandten Anschlussseite zwei Ventilanschlüsse aufweist derart, dass in der zweiten Schaltstellung (82-a) die Verstellsteuerung (64) mit einem Tankanschluss (92) hydraulisch verbunden ist.

12. Nutzfahrzeug (10) mit einem Antriebsmotor (22) und mit einer hydraulischen Anordnung (42) nach einem der Ansprüche 1 bis 11.

13. Nutzfahrzeug nach Anspruch 12, **dadurch gekennzeichnet, dass** der Antriebsmotor (22) mit der Verstellpumpe (46) antriebsverbunden ist.

14. Nutzfahrzeug nach Anspruch 12 oder 13, **dadurch gekennzeichnet, dass** sich die Ventileinheit (72, 74, 78, 82) unmittelbar vor einem Start und/oder während eines Starts des Antriebsmotors (22) in ihrer zweiten Schaltstellung (72-a, 74-a, 82-a) befindet.
